# EUROPEAN PATENT SPECIFICATION

(11) **EP 2 262 118 B1**
(45) Date of publication and mention of the grant of the patent: **18.01.2012**
(21) Application number: 09460023.6
(22) Date of filing: 09.06.2009
(51) Int. Cl.: H04B 1/38

(54) **A holder for a mobile phone with an inclined socket**
Haltung für Mobiltelefon mit schrägem Sockel
Support pour téléphone mobile avec fiche incliné

(43) Date of publication of application: 15.12.2010
(73) Proprietor: BURY Sp. z o.o., 39-300 Mielec (PL)
(72) Inventor: Kramza, Pawel, 36-055 Bratkowice 55c (PL)
(74) Representative: Kaminski, Zbigniew

(56) References cited:
- DE-A1- 19 652 826

## Description

This invention relates to a holder for a mobile phone with an inclined socket, consisting of a base, which is favourably connected with a hanger mounted, for example, within a vehicle, and of a tiltable socket, mounted by means of a hinge on the base, the said holder is further provided with a movable plug that is adapted to enter into the mobile phone socket while the mobile phone is being inserted into the holder. Document DE 19652826 A1 discloses a holder for a mobile phone.

The US patent No. US-2004/0077371 A1 discloses a mobile phone holder, which is connected electrically to a mobile phone. The holder has an oblong multilateral body with a contact unit located at one end of the body. The tiltable contact unit of the holder is adapted to engage with a contact unit of the mobile phone. The mobile phone is placed in the holder in such a way that its contact unit rests on the contact unit of the holder, then, the mobile phone is rotated, fixed and locked in the holder. The length of the holder body is adjustable and may be changed to correspond to the length of the mobile phone. A major inconvenience of this solution is a relatively complex design of the rotatable feed plug and its vulnerability to damage while the phone is being locked in the holder.

The German international PCT application No. WO 2008/058523 A1 describes a mobile phone holder that has a firmly fixed base and a movable carrier with a socket, which is adapted to accommodate the mobile phone. The carrier can be moved perpendicularly to the base from the first position B, in which it locks the mobile phone, to the second position, in which it unlocks the mobile phone. The carrier comprises at least one interface compatible to the interface of the mobile phone. When the mobile phone is inserted into the socket, the interface is within the socket. When the mobile phone is taken out from the socket, the interface is outside the socket

The US patent No. US-5,832,082 describes a mobile phone holder, which body has catch latches on its front surface side that are adapted to engage with the protrusions of the mobile phone. The body is provided with a cavity to accommodate the mobile phone and inside the said body there is provided a protrusion, which is adapted to engage with the recess portion of the mobile phone. When the mobile phone is inserted into the socket, the recess portion rests on the protrusion and the other end of the mobile phone is depressed against the holder, the catch latches lock the mobile phone in the holder. When the phone is further depressed, the catch latches are unlocked and the mobile phone can be detached from the holder.

The European patent EP-0851595 A2 describes a holder for a communication device (for example, a mobile phone, but not only), which has a carrier, pivotably mounted on the base. When the carrier is pivoted towards the base, it presses a spring. The communication device can be inserted into the carrier and one end of the said device touches the locating elements, which block this end of the communication device. The base is further provided with a blocking means. When the communication device and the carrier are further pressed against the base, the said blocking means further presses the communication device against the locating elements and locks the other end of the communication device and, consequently, the entire communication device.

The German patent DE-19946746 A1 describes a mobile phone holder to be used in cars, having a multi-pin plug in its lower portion, which is adapted to engage with a slot in the upper portion of the rear wall of the mobile phone. The mobile phone is inserted into a socket, which is provided in its lower portion with the multi-pin plug, compatible with the slot in the mobile phone. The upper part of the holder, which is adapted to accommodate the mobile phone, is mounted pivotably to the lower part of the holder and is provided with a socket for the lower part of the mobile phone, the said socket is adapted to slide into the upper part of the holder and to press the spring. The lower part of the holder is also provided with lateral guides adapted to guide the mobile phone.

A major inconvenience of the holders referenced above, provided with upper or lateral catches, is that the holders may be damaged easily while attaching a mobile phone, and that the traces of use, such as scratches on the surface of the mobile phone, may be left. The invention is defined in the independent claims. The object of this invention is to provide a holder, which is adapted to hold mobile phones with an inclined socket, where a holder feed plug enters the socket along the axis of the inclined socket of the mobile phone while the phone is being inserted into the holder.

In order to achieve the above object, according to the invention, there is provided a holder for mobile phone with an inclined socket, characterized in that the tiltable socket of the holder is provided with a profiled piece mounted slideably in the tiltable socket and having a plug; the said profiled piece is adapted to move along the axis of the mobile phone socket while the mobile phone is being inserted into the tiltable socket.

The tiltable socket is favourably bipartite and consists of the lower portion and the upper portion, between which there is a slideably mounted profiled piece ending with a plug that is inclined to the axis of the holder at the same angle as the angle of inclination of a mobile phone socket to the axis of the mobile phone.

The profiled piece is favourably provided with guiding projections, whereas the upper portion of the tiltable socket and the lower portion of the tiltable socket are provided with guides, which are adapted to engage with the said guiding projections.

The guides of the lower portion of the tiltable socket and the guides of the upper portion of the tiltable socket are favourably perpendicular to the axis of the holder.

The profiled piece is favourably provided with a spring locating the profiled piece in its initial position.

It is a further object of the present invention to provide a blocking mechanism of a holder for a mobile phone with an inclined socket, which is provided with a tiltable resilient socket adapted to accommodate a mobile phone. The said blocking mechanism also eliminates hook catches gripping the mobile phone and, thus, allows application of the holder to mobile phones of various size.

In order to achieve the above object, according to the invention, there is provided a holder for a mobile phone with an inclined socket, characterized in that the blocking mechanism, which blocks the position of the tiltable socket in relation to the base of the holder, comprises a guiding plate mounted to the base and an unlocking button plate, which is mounted slideably in the said guiding plate and is provided, at one end, with a rectangular hole that is adapted to engage with the catching projection of the upper portion of the tiltable socket.

The unlocking button is favourably provided with a spring, which holds it in the as blocked position.

The guiding plate is favourably covered by a cover, which is provided with stops in its corners and the said stops are provided with resilient inserts to prevent the mobile phone from moving out from the holder.

The holder for a mobile phone with an inclined socket can be applicable especially to mobile phones with rounded edges, where the axis of the socket is inclined to the axis of the mobile phone. The performance tests proved that thanks to the fact that the profiled piece with the plug is guided in the holder, the plug enters the mobile phone socket axially, which prevents damages both to the plug in the holder and to the mobile phone socket.

The blocking mechanism for the resilient tiltable socket of the holder guarantees that the mobile phone is firmly locked in the tiltable socket without a need for any hook catches, which grip the mobile phone casing and cause wear of the external surface of the casing.

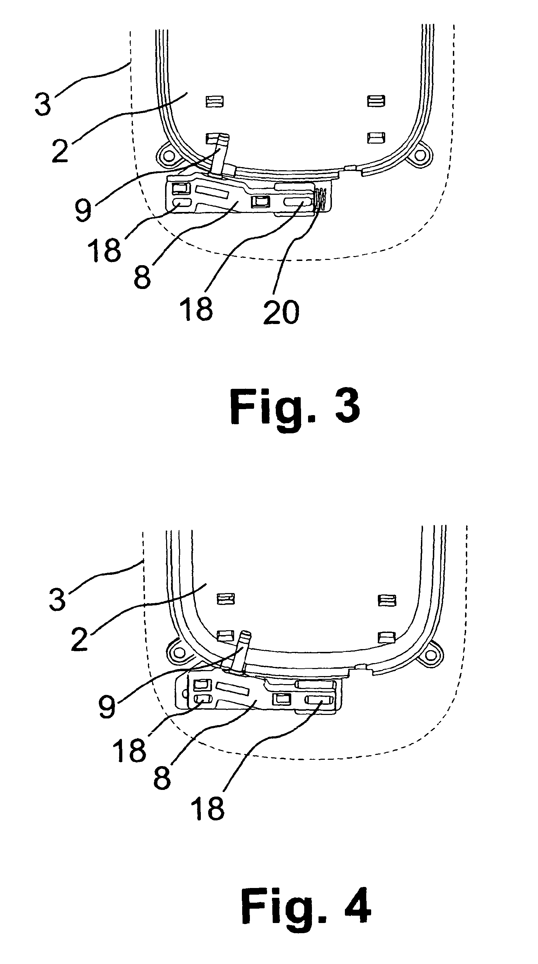

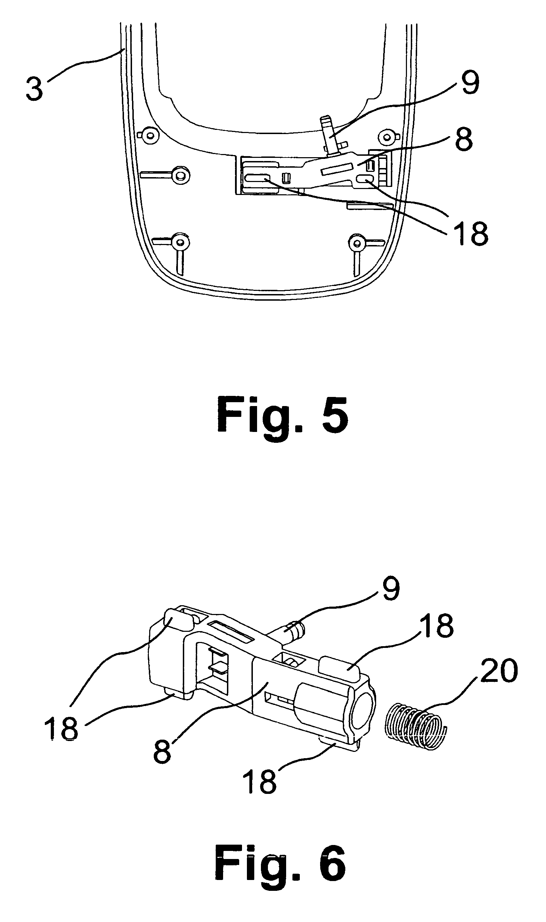

The holder for a mobile phone with an inclined socket is depicted on the drawings where: Fig. 1 - is a perspective front view of the holder; Fig. 2 is a perspective exploded view of the holder; Fig. 3 is a front view of the lower portion of the tiltable socket of the holder with a plug mounted slideably in it, presented in an initial position; Fig. 4 is a front view of the same lower portion of the tiltable socket with a plug as driven into the phone socket; Fig. 5 is a rear view of the upper portion of the tiltable socket with a plug made visible; Fig. 6 is a view of the plug and the profiled piece; Fig. 7 is a sectional view of the holder in the initial position (without a mobile phone); Fig. 8 is a sectional view of the holder in the position with a mobile phone.

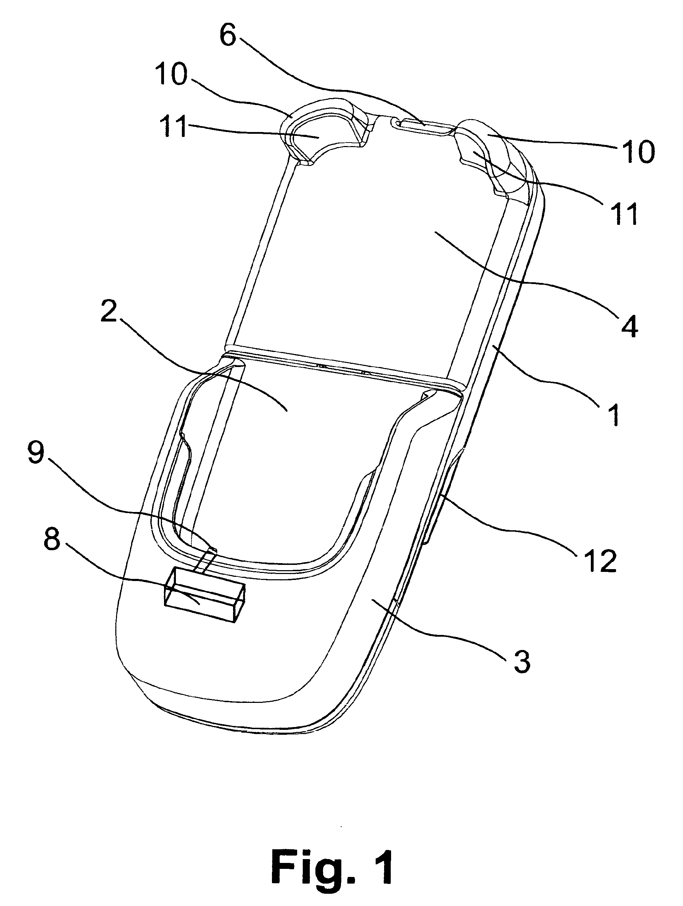

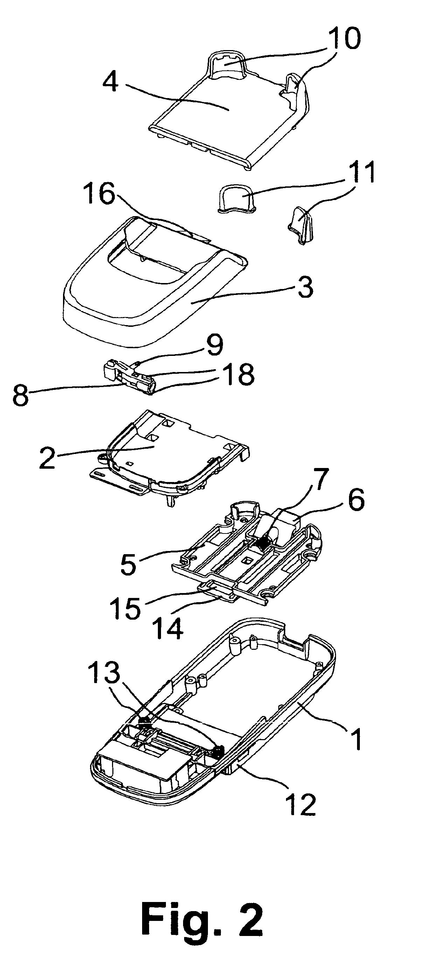

The holder for a mobile phone with an inclined socket, as depicted in the Fig. 1 and Fig. 2, comprises the following basic components: a base 1 with a lower projection 12 for mounting the holder on a hanger fixed within a vehicle, a bipartite socket consisting of a lower portion 2 and the upper portion 3, a cover 4 provided with stops 10 in its corners and a guiding plate 5, located between the base 1 and the cover 4.

Within the base 1 there is provided an electronic unit with a slot adapted to engage with the pins of the hanger; the said electronic unit is not depicted on the drawing. Further, two springs 13 with a bipartite tiltable socket 2, 3 are provided in the lower portion of the base. The cover 4 is connected detachably, for example by means of screws, to the upper portion of the base 1 and the guiding plate 5 of the blocking mechanism is provided under the cover 4. In order to provide a firmer lock of a mobile phone in the tiltable socket 2, 3, the cover 4 is provided, in its rounded corners, with stops 10 with resilient inserts 11, for example, rubber ones. The guiding plate 5 is provided with guides, which are parallel to the axis of the holder and in which the plate 14 of the unlocking button 6 is mounted slideably. In the lower portion of the plate 14 of the unlocking button 6 there is a rectangular hole 15, which is perpendicular to the axis of the holder and is adapted to engage with a catching projection 16 in the upper portion 3 of the socket. The unlocking button 6 with the plate 14 is pressed by the spring 7 and thus held in its upper position.

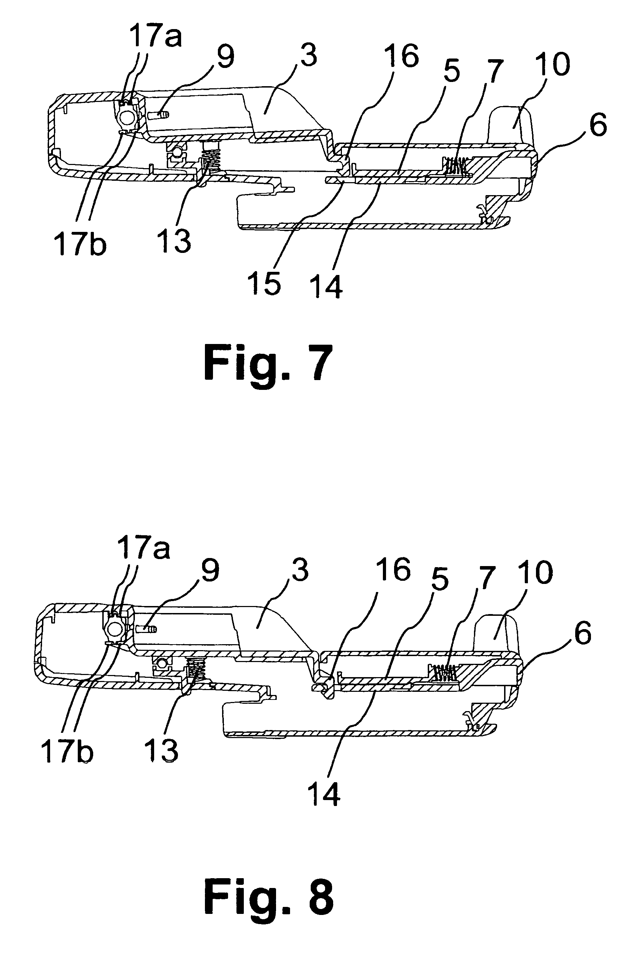

The lower portion 2 of the socket, which has a form of a flat plate with rounded corners, is connected with the upper portion 3 of the socket, which embraces the lower portion. The lower portion 2 and the upper portion 3, connected to each other, are mounted tiltably to hinges, not depicted on the drawings, which make it possible to tilt them from the position as in the Fig. 7 into the position as in the Fig. 8. In the initial position the springs 13 make the socket tilt in the forward direction. On the lower surface side of the upper portion 3 of the socket and on the upper surface side of the lower portion 2 of the socket there are guides 17a and 17b, perpendicular to the axis, in which the projections 18 of the profiled piece 8 with a plug 9 are slideably mounted.

The operation of the above holder for a mobile phone with an inclined socket is as follows:

The mobile phone holder is most often mounted in a hanger, fixed, for example, to an element within a mechanical vehicle. For this purpose the lower projection 12 of the base 1 is hanged on a hanger, not depicted on the drawing, and the pins, which are inside the projection engage with the corresponding slots in the hanger. The holder is then in the initial position, in which its tiltable socket 2, 3 is tilted in the forward direction. A mobile phone 19 is inserted into the tiltable socket 2, 3. Next, the mobile phone is pressed in the direction of the base 1 of the holder (backwards). While the mobile phone is being pressed, its socket moves onto the plug 9 protruding from the lower portion 2 of the tiltable socket and the plug enters into the mobile phone socket. At the same time the profiled piece 8 with the plug 9 slides along the guides 17a and 17b, which guarantees that the movement is made along the axis of the mobile phone socket.

At the same time, while the mobile phone is being pressed, the tiltable socket 2, 3 rotates on the hinges, not depicted on the drawings, from the position as in the Fig. 7 into the position as in the Fig. 8. At the final phase of this rotation, the catching projection 16 of the upper portion 3 of the tiltable socket enters into the rectangular hole 15 of the unlocking button 6 plate 14 and catching on the edge of this hole, blocks the tiltable socket 2, 3 in the position as in the Fig. 8. In order to detach the phone the unlocking button 6 is pressed down and, as a result, the catching projection 16 of the upper portion 3 of the socket is released and the entire socket with the phone in it, is tilted again to the position as in the Fig. 7 under the force of springs 13, The mobile phone can now be taken out from the holder in the upward direction.

## Claims

1. A holder for a mobile phone with an inclined socket, comprising a base, favourably mountable on a hanger, for example, fixed within a mechanical vehicle, and a tiltable socket (2,3) mounted by means of a hinge on the base, the said holder is further provided with a movable plug that is adapted to enter into the mobile phone socket while the mobile phone is being inserted into the holder, **characterized in that** the tiltable socket (2, 3) of the holder is provided with a profiled piece (8), mounted slideably in the tiltable socket and having a plug (9); the said profiled piece is adapted to move along the axis of the mobile phone socket while the mobile phone (19) is being inserted into the tiltable socket.

2. A holder according to Claim 1, **characterized in that** the tiltable socket (2, 3) is bipartite and consists of the lower portion (2) and the upper portion (3), between these portions (2, 3) there is a slideably mounted profiled piece (8) with a plug on one end and the plug is inclined to the axis of the holder at the same angle as the angle of inclination of a mobile phone socket to the axis of the mobile phone (19).

3. A holder according to Claim 1 or Claim 2, **characterized in that** the profiled piece (8) with a plug (9) is favourably provided with guiding projections (18), whereas the upper portion (3) of the tiltable socket and the lower portion (2) of the tiltable socket are provided with guides (17a and 17b), which are adapted to engage with the guiding projections (18).

4. A holder according to Claim 3, **characterized in that** the guides (17a) of the lower portion (2) of the tiltable socket and the guides (17b) of the upper portion (3) of the tiltable socket are perpendicular to the axis of the holder.

5. A holder according to Claim 2, **characterized in that** the profiled piece (8) with a plug (9) is provided with a spring (20) locating the profiled piece in its initial position.

6. A holder for a mobile phone with an inclined socket, comprising a base favourably mountable on a hanger, for example mounted within a mechanical vehicle, and a tiltable socket (2,3), mounted by means of a hinge on the base, the said holder is further provided with a movable plug that is adapted to enter into the mobile phone socket while the mobile phone is being inserted into the holder, **characterized in that** the blocking mechanism, which blocks the position of the tiltable socket (2, 3) in relation to the base (1) of the holder, comprises a guiding plate (5) mounted to the base (1) and an unlocking button (6) plate (14), which is mounted slideably in the guiding plate (5) and is provided, at one end, with a rectangular hole (15) that is adapted to engage with the catching projection (16) of the upper portion (3) of the tiltable socket (2, 3).

7. A holder according to Claim 6, **characterized in that** the unlocking button (6) is provided with a spring (7), which holds it in the as blocked position

8. A holder according to Claim 6, **characterized in that** the guiding plate (5) is covered by a cover (4), which is provided with stops (10) in its corners

9. A holder according to Claim 6, **characterized in that** the stops (10) are provided with resilient inserts (11) to prevent the mobile phone from moving out from the holder.

## Patentansprüche

1. Handyhalterung mit geneigter Steckdose, bestehend aus einer Basis, die sich vorteilhaft an das Gehänge z.B.: innerhalb der Fahrzeugkarroserie anschließen lässt; und aus der in dieser Basis kippbar scharnierweise eingesetzten Tasche (2,3) wobei diese Halterung mit einem beweglichen Stecker ausgestattet ist, welcher in die Steckdose des Handys eingesteckt wird, während das Handy an der Halterung befestigt wird, **dadurch gekennzeichnet, dass** die kippbare Tasche (2,3) mit einem in ihr verschiebbar eingebauten Stecker (9) ausgestattet ist, der während des Hineinsetzens des Handys (19) in der Tasche längs der Achse der Steckdose dieses Handys geschoben wird.

2. Halterung nach Anspruch 1, **dadurch gekennzeichnet, dass** die kippbare Tasche (2,3) zweiteilig ist und aus einem unteren (2) und oberen Teil (3) besteht, wobei zwischen diesen beiden Teilen (2,3) ein verschiebbar eingesetztes Gehäuse (8) angeordnet ist, das mit einem Stecker (9) endet, welcher zur Achse der Halterung unter dieselbem Winkel geneigt ist, unter welchem die Steckdose zur Achse des Handys (19) geneigt ist.

3. Halterung nach Anspruch 1 oder 2, **dadurch gekennzeichnet, dass** das Gehäuse (8) des Steckers (9) mit zwei auskragenden Leitelementen (18) ausgestattet ist, wobei der obere Teil (3) der kippbaren Tasche und der untere Teil (2) der kippbaren Tasche mit Führungen (17a und 17b) ausgesttatet sind, die sich mit diesen auskragenden Elementen verbinden lassen.

4. Halterung nach Anspruch 3, **dadurch gekennzeichnet, dass** die Führungen (17a) des unteren Teils der kippbaren Tasche und die Führungen (17b) des oberen Teils (2) der kippbaren Tasche perpendikulär zur Achse der Halterung angeordnet sind.

5. Halterung nach Anspruch 2, **dadurch gekennzeichnet, dass** das Gehäuse (8) des Steckers (9) mit einer Feder (20) ausgestattet ist, die das Gehäuse in die Ausgangsposition bringt.

6. Handyhalterung mit geneigter Steckdose, bestehend aus einer Basis, die sich vorteilhaft an das Gehänge z.B.: innerhalb der Fahrzeugkarroserie anschließen lässt und aus der in dieser Basis kippbar scharnierweise eingesetzten Tasche (2,3), wobei diese Halterung mit einem beweglichen Stecker ausgestattet ist, welcher in die Steckdose des Handys eingesteckt wird, während das Handy an der Halterung befestigt wird, **dadurch gekennzeichnet, dass** die Vorrichtung, welche die Stellung der kippbaren Tasche (2,3) der Basis (1) der Halterung gegenüber blockiert, aus einem an der Basis (1) befestigten Leitblech (5) besteht und aus der in diesem Leitblech verschiebbar eingebauten - Platte (14) der Auslösetaste (6), die an ihrem Ende mit einer rechteckigen Öffnung (15) ausgestattet ist, welche sich mit dem ansteckbaren Element (16) des oberen Teils (3) der kippbaren Tasche (2,3) verbunden lässt.

7. Halterung nach Anspruch 6, **dadurch gekennzeichnet, dass** die Auslösetaste mit einer Spannfeder (7) ausgestattet ist, die diese Taste blockiert hält.

8. Halterung nach Anspruch 6, **dadurch gekennzeichnet, dass** das Leitblech (5) mit einem Deckel (4) gedeckt ist, an deren Ecken Anschläge (10) angeordnet sind

9. Halterung nach Anspruch 8, **dadurch, gekennzeichnet, dass** die Anschläge (10) mit elastischen Einsätzen (11) ausgestattet sind, die dem Hinausfallen des Handys aus der Halterung vorbeugen.

## Revendications

1. Le support de téléphone portable à la prise de courant femelle inclinée, composé d'un pied, bien accordé à la poignée fixée par exemple à l'intérieur de la carrosserie de la voiture et de poche inclinable à charnière mise au pied (2,3) et en plus, le support est équipé d'un connecteur mâle mobile qui entre à l'intérieur de la prise de courant femelle du téléphone portable en cours de sa mise au support, **caractérisé en ce que** sa poche inclinable (2,3) est munie d'un connecteur mâle mobile (9) qui se décale le long de l'axe de prise de courant femelle de ce téléphone portable en cours de sa mise dans la poche (19).

2. Le support, selon la revendication n°1, **caractérisé en ce que** la poche inclinable (2, 3) est bipartie et se compose d'une partie inférieure (2) et supérieure (3) et en plus, entre ces deux parties (2 et 3), il y a un corps (8) fixé de manière décalable, terminé par le connecteur mâle (9) dont l'angle d'inclinaison à l'axe du support est le même que l'angle d'inclinaison de la prise de courant femelle à l'axe du téléphone portable (19).

3. Le support, selon la revendication n°1 ou 2, **caractérisé en ce que** le corps (8) du connecteur mâle (9) est muni de détrompeurs de glissière (18) et la partie supérieure (3) et inférieure (2) de la poche inclinable sont équipées de glissières (17a et 17b) qui coopèrent avec des détrompeurs ci-dessus (18).

4. Le support, selon la revendication n°3, **caractérisé en ce que** des glissières (17a) de partie inférieure (2) de la poche inclinable et des glissières (17b) de partie supérieure (3) de la poche inclinable ont une direction perpendiculaire à l'axe du support.

5. Le support, selon la revendication n°2, **caractérisé en ce que** le corps (8) du connecteur mâle (9) est muni de ressort (20) qui le place dans la position d'entrée.

6. Le support de téléphone portable à la prise de courant femelle inclinée, composé d'un pied, bien accordé à la poignée fixée par exemple à l'intérieur de la carrosserie de la voiture et de poche inclinable à charnière mise au pied (2,3) et en plus, le support est équipé d'un connecteur mâle mobile qui entre à l'intérieur de la prise de courant femelle du téléphone portable en cours de sa mise au support, **caractérisé en ce que** le mécanisme de blocage de la position de poche inclinable (2, 3) par rapport du pied (1) du support se compose de plaquette de glissière (5) fixée au pied (1) et de plaquette (14) de bouton de déblocage installée dans la plaquette de glissière de manière décalable, munie d'orifice rectangulaire (15) à son bout coopérant avec une griffe d'attache (16) de partie supérieure (3) de la poche inclinable (2, 3).

7. Le support, selon la revendication n°6, **caractérisé en ce que** son bouton de déblocage est équipé de ressort expandeur (7) qui le met dans la position fixe.

8. Le support, selon la revendication n°6, **caractérisé en ce que** sa plaquette de glissière couverte avec un couvercle (4) munie de tampons dans les coins.

9. Le support, selon la revendication n°8, **caractérisé en ce que** ses tampons (10) sont équipés d'élastiques qui préviennent la chute du téléphone posrtable du support
